Europäisches Patentamt

(19) European Patent Office

Office européen des brevets

(11) Numéro de publication: **0 183 597**
**A1**

## (12) DEMANDE DE BREVET EUROPEEN

(21) Numéro de dépôt: **85402167.2**

(22) Date de dépôt: **08.11.85**

(51) Int. Cl.⁴: **H 02 J 9/06**

(30) Priorité: **13.11.84 FR 817294**

(43) Date de publication de la demande:
**04.06.86 Bulletin 86/23**

(84) Etats contractants désignés:
**BE DE GB**

(71) Demandeur: **THOMSON-CSF**
**173, Boulevard Haussmann**
**F-75379 Paris Cedex 08(FR)**

(72) Inventeur: **Bech, Alexandre**
**THOMSON-CSF SCPI 173, bld Haussmann**
**F-75379 Paris Cedex 08(FR)**

(74) Mandataire: **Trocellier, Roger et al,**
**THOMSON-CSF SCPI 19, avenue de Messine**
**F-75008 Paris(FR)**

(54) **Circuit de protection contre les coupures d'alimentation électrique.**

(57) Le circuit permet de pallier d'éventuelles micro-coupures de tension sur un réseau d'alimentation continue.

Le circuit est connecté à un réseau d'alimentation muni d'un circuit de régulation élévateur de tension il. En fonctionnement normal la tension d'entrée est transmise à l'entrée du circuit de régulation par l'intermédiaire d'une diode d'arrêt (16). Un circuit de régulation élévateur de tension (11) charge un condensateur (2) à une tension de charge ($V_s$) nettement supérieure à la tension d'entrée ($V_E$). Un détecteur de micro-coupures (14) reçoit également la tension d'entrée et, lorsque des coupures apparaissent, commande le changement d'état d'un interrupteur (12) qui connecte alors le condensateur via un circuit abaisseur de tension (6) à l'entrée du circuit de régulation (11). Le condensateur se décharge alors à la tension d'entrée de ce circuit de régulation ($V_2$).

Utilisation à la protection des alimentations des aéronefs.

FIG_2

EP 0 183 597 A1

## CIRCUIT DE PROTECTION CONTRE LES COUPURES
## D'ALIMENTATION ELECTRIQUE

L'invention s'applique à des réseaux d'alimentation qui présentent des surtensions et des baisses de tension notables.

C'est le cas en particulier des réseaux d'alimentation des appareils embarqués à bord des aéronefs. A titre d'exemple pour un réseau de 28 Volts, la tension est affectée par des micro-coupures qui font chuter la tension du réseau à 0V, par des baisses de tension momentanées jusqu'à 12V environ, alors que des surtensions momentanées peuvent aller jusqu'à 80V, et ceci lors de variations brutales de charge. Les micro-coupures peuvent être compensées en utilisant un circuit de protection dans la mesure où elles n'excèdent pas une durée trop élevée (la plage maximale prévue peut être de 50 millisecondes).

Il est connu d'utiliser un réservoir d'énergie, généralement un condensateur, pour le substituer au réseau d'alimentation durant la coupure. Dans l'exemple considéré précédemment, le condensateur doit être à même de supporter la surtension maximale envisagée, par exemple 80V. Sa charge à la tension du réseau, 20 à 30V, offre une réserve énergétique utilisable limitée.

Le but de l'invention est d'accroître la quantité énergétique disponible, de façon à supporter des coupures de durée plus longues, par exemple 250 millisecondes, de même que de fortes baisses de tension.

L'objet de l'invention est un circuit de protection contre les coupures d'alimentation, utilisant un condensateur pour stocker l'énergie électrique continue et la fournir durant les coupures, ledit circuit étant interposé sur un réseau d'alimentation continue délivrant avant régulation une tension continue d'entrée, caractérisé en ce qu'il comporte des moyens de charge du condensateur à une tension prédéterminée et supérieure à la tension d'entrée, une diode d'arrêt recevant ladite tension continue d'entrée, des moyens de commutation pour connecter le condensateur à la place du réseau en cas de coupure, ces moyens comportant un circuit détecteur de coupure alimenté par ladite tension d'entrée continue et dont la sortie commande un interrupteur qui connecte le condensateur à la sortie des moyens de charge en fonctionnement normal, et en cas de coupure au réseau à la sortie de ladite diode, cette dernière connexion s'effectuant à travers un circuit abaisseur de tension.

Les particularités et avantages de l'invention apparaîtront plus nettement à la lecture de la description qui suit, illustrée des figures qui représentent :

- Fig.1, un schéma général d'une première alimentation équipée d'un circuit de protection selon l'invention ;

- Fig. 2, un schéma général d'une deuxième alimentation équipée d'un circuit de protection selon l'invention ;

- Fig. 3, un mode de réalisation du circuit de la fig. 2.

Le circuit de protection selon l'invention comprend un élément de stockage et les circuits et organes nécessaires à sa charge et à sa décharge. Il est connecté à un réseau d'alimentation électrique doté d'un régulateur de tension.

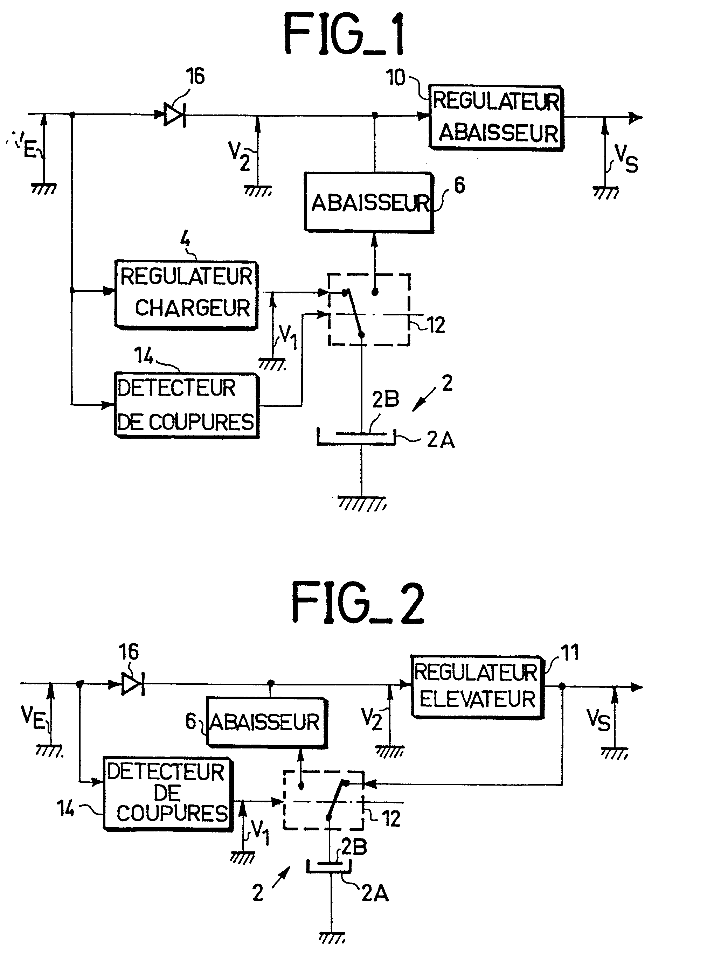

En référence à la figure 1 l'élément de stockage d'énergie électrique est le condensateur 2, qui fournit pendant les coupures un apport d'énergie au réseau et à son circuit de régulation 10, délivrant une tension d'utilisation du réseau $V_S$. Le circuit reçoit à son entrée la tension continue $V_E$ du réseau, continu ou alternatif redressé. Pour charger le condensateur 2, un circuit de charge 4 reçoit la tension d'entrée $V_E$. Il comprend des éléments de régulation et des éléments transformateurs pour délivrer une tension de charge prédéterminée $V_1$ très supérieure à la tension d'entrée $V_E$ du dispositif. Si cette dernière varie de 0 à 30 Volts, $V_1$ sera avantageusement choisie à 80 Volts. Pour coordonner la charge et la décharge à bon escient du condensateur, un circuit détecteur de coupure 14 est utilisé. Il reçoit donc la tension $V_E$ d'entrée et un seuil de tension minimale au-dessous de laquelle il est nécessaire d'avoir recours au condensateur pour alimenter le réseau. La sortie de ce détecteur de coupures commande un interrupteur 12. Ce dernier, en fonctionnement normal, relie la sortie du circuit régulateur-chargeur 4 à une première armature du condensateur 2 pour que celui-ci se charge à la tension $V_1$, la deuxième armature étant reliée à un potentiel de référence. Lorsqu'il n'y a pas de coupure, la tension d'entrée du dispositif $V_E$ est appliquée à l'entrée du circuit de régulation 10 par l'intermédiaire d'une diode 16 d'arrêt. Lorsque la tension d'entrée $V_E$ tombe à zéro ou chute au-dessous d'un seuil déterminé, le détecteur de coupures commande le changement d'état de l'interrupteur 12. Celui-ci relie alors le condensateur 12 au réseau à travers un circuit abaisseur de tension 6 constitué par exemple d'une résistance. Ce circuit abaisseur de tension permet d'alimenter pendant la micro-coupure, le circuit régulateur-chargeur 10 à sa tension d'entrée $V_2$.

C étant la capacité du condensateur 2, l'énergie délivrée par celui-ci est proportionnelle à $C (V_1^2 - V_2^2)$.

Quelles que soient les variations de la tension d'entrée du dispositif $V_E$, le condensateur est toujours chargé à la tension de charge $V_1$. Cette dernière et la tension d'entrée $V_2$ du circuit de régulation sont choisies pour que l'énergie emmagasinée par le condensateur 2 soit suffisante pour pallier une micro-coupure de durée déterminée et permettre au circuit de régulation 10 de délivrer la tension $V_S$ d'utilisation du réseau.

Ce premier montage est utilisé lorsque la tension de sortie $V_S$ est inférieure à tension d'entrée $V_E$, le régulateur 10 étant alors un régulateur-abaisseur de tension.

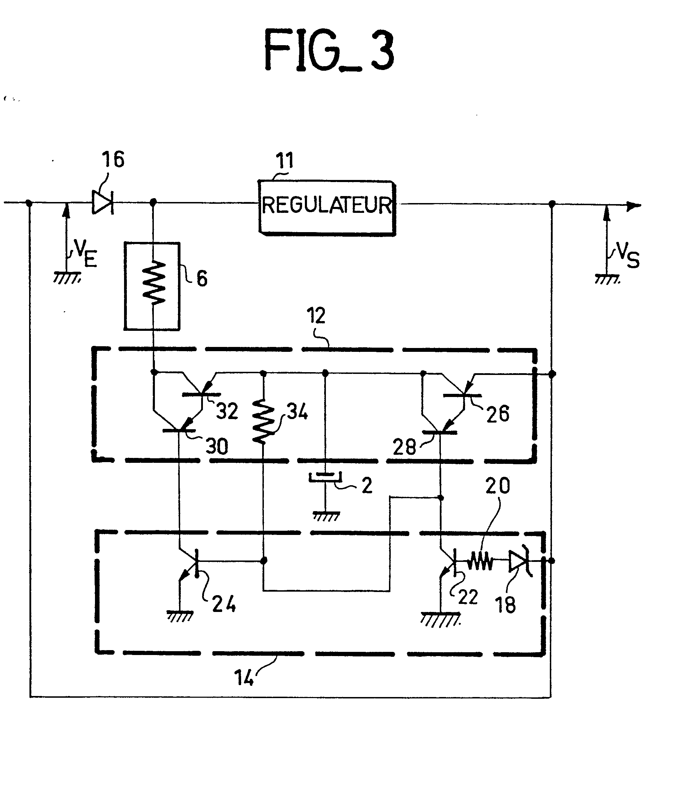

La figure 2 représente un deuxième montage pour un régulateur-élévateur de tension, c'est-à-dire que la tension de sortie $V_S$ est supérieure à la tension d'entrée $V_1$. On suppose dans ce cas que la différence entre ces deux tensions d'entrée et de sortie est suffisante pour que le condensateur 2 puisse être chargé à la tension de sortie $V_S$. Le circuit de charge est ainsi supprimé. Le condensateur 2, en régime normal, est connecté par l'interrupteur 12 à la sortie du circuit de régulation élévateur de tension 11. On utilise également dans ce dispositif un circuit détecteur de coupures 14 qui commande le changement d'état de l'interrupteur 12 lorsque une micro-coupure apparaît à l'entrée du circuit. Le condensateur est alors connecté à un abaisseur de tension 6 qui alimente l'entrée du circuit de régulation 11. Le condensateur se décharge à la tension d'entrée $V_2$ d'entrée du circuit de régulation qui est inférieure à la tension de sortie $V_S$. Une diode d'arrêt 16 est toujours utilisée entre le circuit de régulation 11 et l'entrée du dispositif. Les tensions de sortie $V_S$ et d'entrée $V_2$ du circuit de régulation 11 sont choisies pour que l'énergie emmagasinée dans le condensateur permette de pallier les micro-coupures de durée prédéterminée. Dans ce cas de figure également, malgré les variations possibles de la tension d'entrée $V_E$ le condensateur sera toujours chargé à la tension de sortie $V_S$.

Sur la figure 3 est représenté une réalisation du circuit monté avec un régulateur-élévateur de tension conformément au diagramme de la figure 2. Dans cette réalisation, l'entrée du détecteur 14 reçoit la tension d'entrée $V_E$ à la cathode d'une diode Zenner 18. Un résistance 20 est connectée à l'anode de cette diode par sa première extrémité et à la base d'un premier transistor NPN 22 dont l'émetteur est relié à un potentiel de référence. Le collecteur de ce premier transistor sert à commander un des deux états binaires de l'interrupteur 12. Il est en outre relié à la base d'un deuxième transistor NPN 24, dont l'émetteur est également relié au même potentiel de référence. Le collecteur de ce deuxième transistor NPN sert à commander le deuxième état de l'interrupteur 12.

L'interrupteur 12 peut être réalisé de la manière suivante avec deux montages de deux transistors montés en cascade, et avec le collecteur en commun. Plus précisément, un premier transistor PNP 26 reçoit par son émetteur la tension de sortie $V_S$, sa base étant connectée à l'émetteur d'un deuxième transistor PNP 28 dont la base reçoit le signal issu du collecteur du transistor 22. Les collecteurs de ces deux transistors 26, 28 sont reliés à l'armature de charge du condensateur 2. De façon identique, un troisième transistor PNP 32 est connecté par sa base à l'émetteur d'un quatrième transistor PNP 30 dont la base reçoit le signal issu du collecteur du transistor 24. Les collecteurs des deux transistors 30 et 32 sont connectés à l'entrée du circuit abaisseur de tension 6. La sortie de ce dernier est appliquée à l'entrée du circuit régulateur 11, l'émetteur du transistor 32 étant relié à l'armature de charge du condensateur 2. Une résistance 34 est connectée d'une part à la base du transistor 24, et d'autre part à l'émetteur du transistor 32.

Lorsque la tension d'entrée du circuit $V_E$ est suffisante, la tension à la base du transistor 22 permet aux deux transistors 26 et 28 de connecter l'armature de charge du condensateur 2 à la sortie du circuit $V_S$, le montage réalisé par l'ensemble des transistors 30 et 32 restant bloqué. Lorsque la tension d'entrée du circuit $V_E$ n'est plus suffisante, le montage réalisé par les deux transistors 26 et 28 se bloque et le transistor 24 débloque le montage réalisé par les transistors 30 et 32 permettant ainsi au condensateur 2 de se décharger sur l'entrée du circuit régulateur-élévateur 11.

Cette réalisation n'est décrite qu'à titre d'exemple, de nombreuses autres possibilités de montage sont possibles pour réaliser la fonction de charge et de décharge telle qu'elle est décrite dans l'invention.

Ce circuit est particulièrement adapté pour pallier les microcoupures de l'ordre de 50 millisecondes qui peuvent surgir sur le ou les réseau(x) d'alimentation, par exemple ceux des aéronefs.

REVENDICATIONS

1. Circuit de protection contre les coupures d'alimentation, utilisant un condensateur (2) pour stocker l'énergie électrique continue et la fournir durant les coupures, ledit circuit étant interposé sur un réseau d'alimentation continue délivrant avant régulation une tension continue d'entrée ($V_E$), caractérisé en ce qu'il comporte des moyens de charge (4,11) du condensateur à une tension ($V_1$) prédéterminée et supérieure à la tension d'entrée ($V_E$), une diode d'arrêt (16) recevant ladite tension continue d'entrée, des moyens de commutation pour connecter le condensateur à la place du réseau en cas de coupure, ces moyens comportant un circuit détecteur de coupure (14) alimenté par ladite tension d'entrée continue et dont la sortie commande un interrupteur (12) qui connecte le condensateur à la sortie des moyens de charge en fonctionnement normal, et en cas de coupure au réseau à la sortie de ladite diode, cette dernière connexion s'effectuant à travers un circuit abaisseur de tension (6).

2. Circuit de protection selon la revendication 1 destiné à une alimentation comportant un régulateur abaisseur de tension (10), caractérisé en ce que les moyens de charge sont constitués d'un circuit régulateur chargeur (4) recevant la tension continue d'entrée ($V_E$) et délivrant la tension supérieure ($V_1$), ledit circuit régulateur-abaisseur de tension recevant la sortie de la diode (16) et celle du circuit abaisseur de tension (6).

3. Circuit de protection selon la revendication 1 destiné à une alimentation comportant un régulateur élévateur de tension (11), caractérisé en ce que les moyens de charge se composent dudit circuit régulateur élévateur de tension recevant la sortie de la diode (16) et celle du circuit abaisseur de tension (6) et dont la sortie ($V_S$) est connectée au condensateur (2) en fonctionnement normal.

4. Circuit selon la revendication 3, caractérisé en ce que le détecteur de coupure (14) se compose d'une diode Zenner (18) recevant par sa cathode la tension d'entrée du dispositif ($V_E$) et dont l'anode est reliée par l'intermédiaire d'une première résistance (20) à la base d'un premier transistor NPN (22) dont le collecteur commande le premier état binaire de l'interrupteur (12) et est relié à la base d'un deuxième transistor NPN (24) qui commande par son collecteur le deuxième état binaire de l'interrupteur, les émetteurs de ces deux transistors NPN étant reliés à un même potentiel de référence.

5. Circuit selon la revendication 4, caractérisé en ce que l'interrupteur est réalisé avec deux montages de deux transistors PNP (26,28 et 30,32) montés en cascade avec le collecteur en commun.

6. Circuit de stockage d'énergie électrique selon l'une quelconque des revendications précédentes, prévu pour pallier d'éventuelles micro-coupures de tension sur un réseau d'alimentation d'un aéronef.

0183597

# FIG_1

16

10

REGULATEUR
ABAISSEUR

$V_E$

$V_2$

$V_S$

ABAISSEUR  6

4

REGULATEUR
CHARGEUR

$V_1$

12

14

DETECTEUR
DE COUPURES

2B  2

2A

# FIG_2

16

11

REGULATEUR
ELEVATEUR

$V_E$

6  ABAISSEUR

$V_2$

$V_S$

DETECTEUR
DE
COUPURES

14

$V_1$

12

2B

2

2A

# FIG_3

# 0183597

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int Cl 4) |
|---|---|---|---|
| A | IBM TECHNICAL DISCLOSURE BULLETIN, vol. 14, no. 1, juin 1971, pages 68-69, New York, US; R.A. TENLEY: "Power line disturbance support circuit" * En entier * | 1,2,4 | H 02 J 9/06 |
| A | DE-A-3 045 445 (SIEMENS) * Page 2, ligne 36 - page 3, ligne 16; page 4, ligne 11 - page 5, ligne 3; figure 1 * | 1,2 | |
| A | US-A-4 220 872 (R.J. FAHEY) * Colonne 2, ligne 47 - colonne 3, ligne 24; colonne 6, lignes 5-34; figure * | 1,2 | |
| A | ELECTRONIC ENGINEERING, vol. 56, no. 685, janvier 1984, pages 70-76, Londres, GB; "Product Focus, Power supplies" * Page 75, figure 3 * | 1-3 | DOMAINES TECHNIQUES RECHERCHES (Int Cl 4)  H 02 J |
| A | US-A-3 631 257 (B.C. BEHR et al.) * Abrégé; colonne 2, ligne 62 - colonne 3, ligne 35; figure * | 4,5 | |

Le present rapport de recherche a ete établi pour toutes les revendications

| Lieu de la recherche | Date d'achèvement de la recherche | Examinateur |
|---|---|---|
| LA HAYE | 03-02-1986 | HELOT H.V. |